# EUROPEAN PATENT APPLICATION

(11) **EP 4 059 882 A2**
(43) Date of publication of application: **21.09.2022**
(21) Application number: 22161498.5
(22) Date of filing: 11.03.2022
(51) Int. Cl.: B68G 3/10, D06M 19/00

(54) **STUFFING STRUCTURE AND MANUFACTURING METHOD THEREOF**

(30) Priority: 15.03.2021 TW 110109209
(71) Applicant: Tianchen Innovative Materials Technology Co., Ltd, 300042 Hsinchu City (TW)
(72) Inventor: MAI, Yu-Shen, 300042 Hsinchu City (TW); KU, Kuan-Lin, 300042 Hsinchu City (TW); LEE, Ko-Sen, 300042 Hsinchu City (TW)
(74) Representative: Becker, Eberhard

(57) **Abstract**

A stuffing structure (100), including a stuffing substrate (110) and a carbon layer (120), is provided. The carbon layer (120) is directly attached to a surface (110a) of the stuffing substrate (110). The carbon layer (120) exhibits an irregular shape, and the carbon layer (120) is configured to radiate infrared. A manufacturing method of the stuffing structure (100) is also provided.

## Description

### BACKGROUND

### Technical Field

This disclosure relates to a structure and a manufacturing method thereof, and in particular to a stuffing structure and a manufacturing method thereof.

### Description of Related Art

In general, a stuffing is often used in a product, and the corresponding stuffing is selected according to the required functions of the product. For example, feathers are often used to stuff a bedding product or a clothing product and the like for warmth retention properties. Improvements are further made to the stuffing, so as to enhance the economic value of the product. In view of this, the improvement and development of stuffing remain a common goal for those skilled in the art.

### SUMMARY

This disclosure provides a stuffing structure and a manufacturing method thereof, which may increase an economic value of a resultant product from the processing thereof.

A stuffing structure of the disclosure includes a stuffing substrate and a carbon layer. The carbon layer is directly attached to a surface of the stuffing substrate. The carbon layer exhibits an irregular shape, and the carbon layer is configured to radiate infrared (IR).

In an embodiment of the disclosure, the stuffing substrate includes bird feathers, staple fibers, or natural cotton, and the carbon layer includes graphene, carbon nanotubes, bamboo charcoal, or graphite.

In an embodiment of the disclosure, the stuffing substrate is feathers, and the carbon layer is graphene.

In an embodiment of the disclosure, a weight ratio of the carbon layer to the stuffing substrate is at least greater than or equal to 0.1%, and less than or equal to 100%.

In an embodiment of the disclosure, the stuffing structure does not have a resin material layer.

In an embodiment of the disclosure, the carbon layer includes at least two portions, and the at least two portions have different sizes.

In an embodiment of the disclosure, the at least two portions have different irregular shapes.

In an embodiment of the disclosure, the carbon layer includes multiple portions, and the multiple portions are irregularly distributed on the surface.

In an embodiment of the disclosure, the multiple portions include at least a first portion, a second portion, and a third portion. A distance between the first portion and the second portion is different from a distance between the second portion and the third portion.

A manufacturing method of a stuffing structure includes at least the following steps. A first solution that includes a carbon material is provided. A stuffing and water are added to the first solution, so as to form a second solution. The second solution is stirred. The stuffing in the second solution is dried.

Based on the above, the stuffing structure of the disclosure may enable the stuffing structure to have the function of improving warming up ability and thermal energy storage through the design of configuring the carbon layer that may radiate the infrared on the surface of the stuffing substrate, thereby increasing the economic value of the resultant product from the processing of the stuffing structure.

To make the abovementioned more comprehensible, several embodiments accompanied by drawings are described in detail as follows.

### BRIEF DESCRIPTION OF THE DRAWINGS

FIG. 1A is a schematic partial cross-sectional view of a stuffing structure according to an embodiment of the disclosure.
FIGs. 1B and 1C are scanning electron microscope (SEM) images of the stuffing structure according to an embodiment of the disclosure.
FIG. 1D is a diagram showing a relationship between the stuffing structure according to an embodiment of the disclosure and the stuffing structure without a carbon layer when subjected to a warming up ability and thermal energy storage test.
FIGs. 2A to 2C are schematic diagrams of a part of a manufacturing method of the stuffing structure according to an embodiment of the disclosure.
FIG. 3 is a flowchart of the manufacturing method of the stuffing structure according to an embodiment of the disclosure.

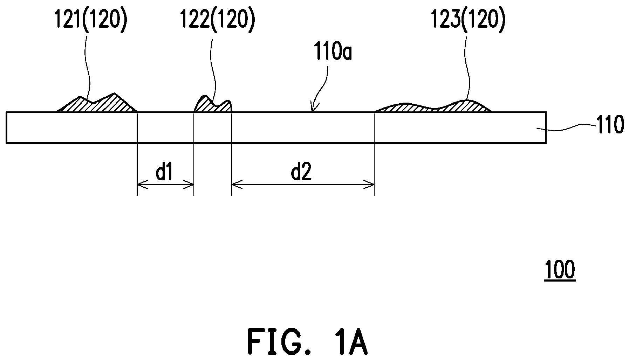

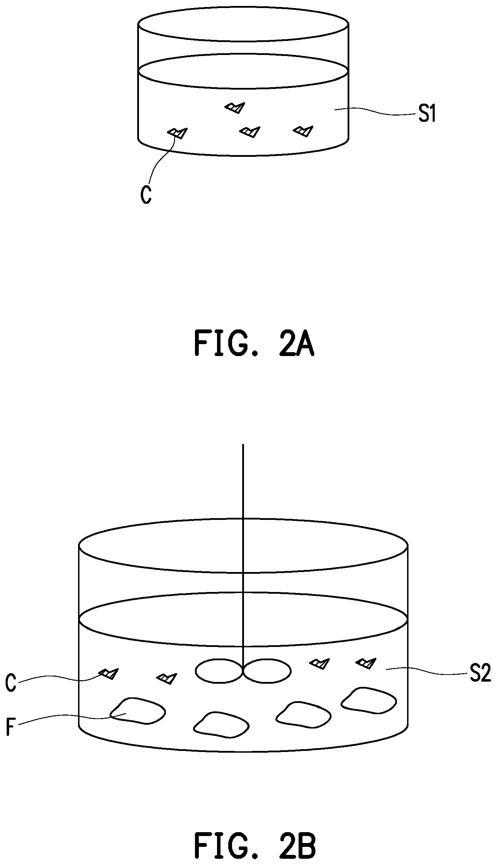

It should be noted that, for the sake of clarity, components in FIGs. 1A and 2A to 2C are not drawn to scale. In addition, content shown in the drawings is not an actual product type, and is only a schematic illustration.

### DESCRIPTION OF THE EMBODIMENTS

Hereinafter, reference numerals are added to describe preferred embodiments of the disclosure in detail, and the description is accompanied with the drawings. Whenever possible, unnecessary components are omitted for clarity.

Directional terms used herein (for example, up, down, right, left, front, back, top, bottom) are only meant as reference for the drawings and are not intended to imply absolute orientation.

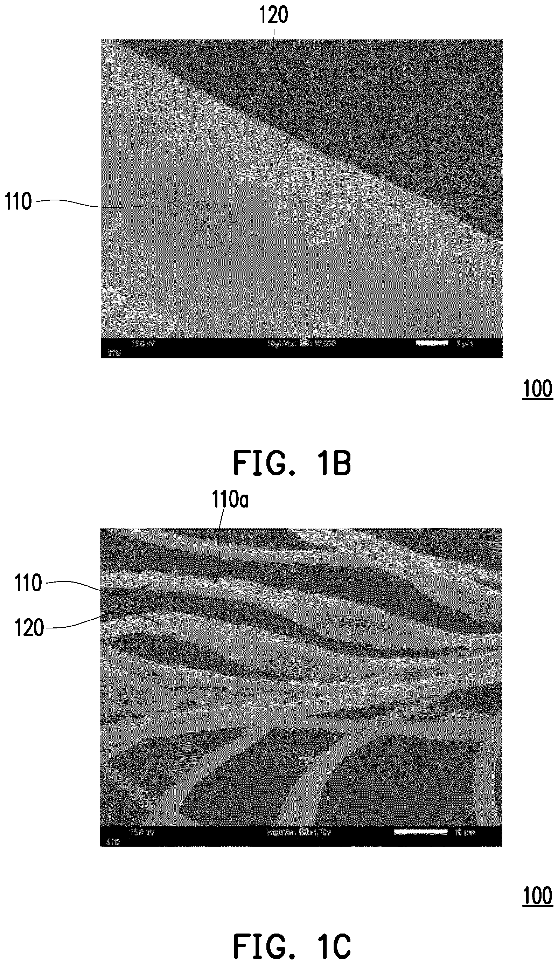

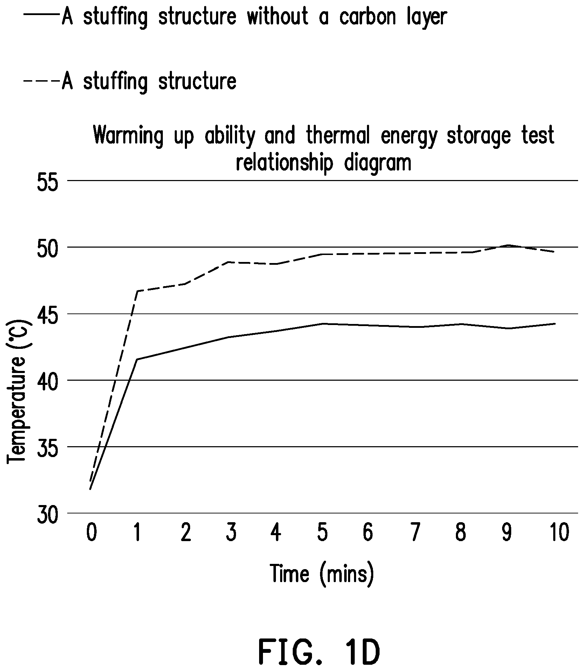

FIG. 1A is a schematic partial cross-sectional view of a stuffing structure according to an embodiment of the disclosure. FIGs. 1B and 1C are scanning electron microscope (SEM) images of the stuffing structure according to an embodiment of the disclosure. FIG. 1D is a diagram showing a relationship between the stuffing structure according to an embodiment of the disclosure and the stuffing structure without a carbon layer when subjected to a warming up ability and thermal energy storage test.

With reference to FIGs. 1A to 1D, a stuffing structure 100 of the embodiment includes a stuffing substrate 110 and a carbon layer 120, wherein the carbon layer 120 is directly attached to a surface 110a of the stuffing substrate 110. Furthermore, the carbon layer 120 exhibits an irregular shape, and the carbon layer 120 is configured to radiate infrared. Accordingly, the stuffing structure 100 of the embodiment may enable the stuffing structure 100 to increase a thermal energy storage capability through the design of configuring the carbon layer 120 capable of radiating the infrared on the surface 110a of the stuffing substrate 110, thereby increasing an economic value of a resultant product from processing of the stuffing structure 100. Here, the irregular shape is, for example, not a regular shape such as a circle or a polygon, but the disclosure is not limited thereto.

In some embodiments, the stuffing substrate 110 may include bird feathers (for example, including down and feathers), artificial fibers (staple fibers), or natural cotton, and the carbon layer 120 may include graphene, carbon nanotubes, bamboo charcoal, or graphite. For example, in a bedding product or a clothing product, when the stuffing substrate 110 is feathers, and the carbon layer 120 is graphene, the stuffing structure 100 including the above-mentioned material (graphene) is enabled to have an enhanced thermal energy storage capability (for example, the stuffing structure 100 with the above-mentioned material (graphene) has a far-infrared emissivity capable of reaching 0.83 under test conditions of the National Taiwan Technology Research and Development Center with a condition of the quantity being 0.1 g to 0.15 g, but the disclosure is not limited thereto) and an antibacterial function through the graphene that is capable of radiating far infrared and have antibacterial capabilities and other properties, thereby further increasing the economic value of the resultant product from the processing of the stuffing structure 100.

Furthermore, as shown in FIG. 1D, the warming up ability and thermal energy storage test is performed on the stuffing structure of the embodiment and the stuffing structure without a carbon layer, which are both subjected to conditions of an ambient temperature of 17°C, a sample weight of 0.3 g, a light source irradiation distance of 30 cm, a light source wattage of 400 watts, and a distance between a thermal imager and the sample of 30 cm. As compared to the stuffing structure without the carbon layer, the stuffing structure 100 including the above-mentioned materials (feather and graphene) may significantly improve its thermal energy storage capability. For example, it may increase temperature by at least 5 °C in 10 minutes, but the disclosure is not limited thereto. It should be noted that the disclosure does not limit the material of the stuffing substrate 110 and the material of the carbon layer 120. The material of the stuffing substrate 110 and the material of the carbon layer 120 may be determined according to actual product design requirements. As long as the material of the carbon layer 120 is capable of radiating infrared, so that the stuffing structure has the function of improving the thermal energy storage capability, it falls within the protection scope of the disclosure.

In some embodiments, the carbon layer 120 and the stuffing substrate 110 may have a certain weight ratio. For example, the weight ratio of the carbon layer 120 to the stuffing substrate 110 may be at least greater than or equal to 0.1%, and less than or equal to 100%. Furthermore, the weight ratio of the carbon layer 120 to the stuffing substrate 110 is, for example, greater than or equal to 0.5%, and less than or equal to 10%, but the disclosure is not limited thereto. The weight ratio of the carbon layer 120 to the stuffing substrate 110 may be adjusted according to actual design requirements.

In some embodiments, the carbon layer 120 may include at least two portions, and the at least two portions have different sizes. For example, FIG. 1A schematically illustrates that the carbon layer 120 may include at least a first portion 121, a second portion 122, and a third portion 123. The first portion 121, the second portion 122, and the third portion 123 have different sizes respectively, but the disclosure is not limited thereto. Two portions of the first portion 121, the second portion 122, and the third portion 123 may have the same size, which is different from the other portion (not shown).

In some embodiments, at least two portions of the carbon layer 120 have different irregular shapes. For example, as shown in FIG. 1A, the first portion 121, the second portion 122, and the third portion 123 are all irregular shapes, and the first portion 121, the second portion 122, and the third portion 123 have different irregular shapes, but the disclosure is not limited thereto. Two portions of the first portion 121, the second portion 122, and the third portion123 may have the same shape, which is different from the other portion (not shown).

In some embodiments, the multiple portions of the carbon layer 120 may be irregularly distributed on the surface 110a of the stuffing substrate 110. For example, as shown in FIG. 1A, the first portion 121, the second portion 122, and the third portion 123 may be irregularly distributed on the surface 110a of the stuffing substrate 110. Irregular distribution is, for example, in which a distance d1 between the first portion 121 and the second portion 122 may be different from a distance d2 between the second portion 122 and the third portion 123, but the disclosure is not limited thereto. There may be other irregular distribution means for the multiple portions of the carbon layer 120 according to the actual design requirements.

It should be noted that the disclosure does not limit the above-mentioned aspects, as long as the at least two portions have different sizes, different shapes, or have an irregular distribution means, they all fall within the protection scope of the disclosure.

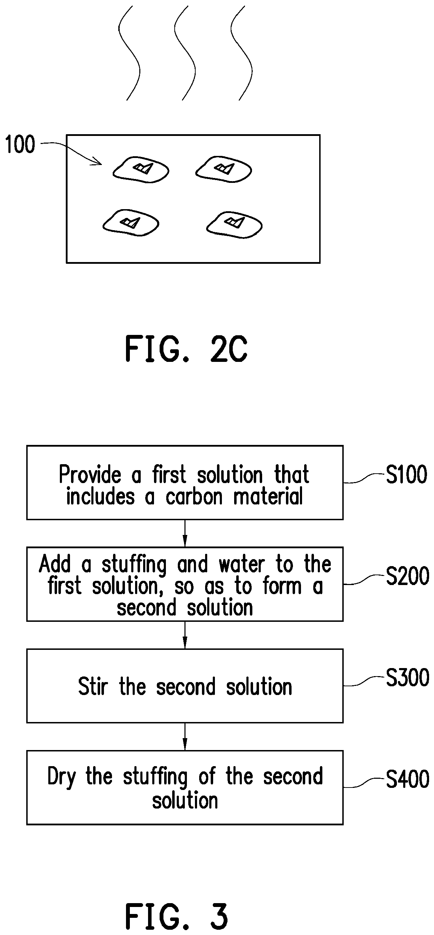

A main flow of the stuffing structure according to an embodiment of the disclosure is described below accompanied by the drawings. FIGs. 2A to 2C are schematic diagrams of a part of a manufacturing method of the stuffing structure according to an embodiment of the disclosure. FIG. 3 is a flowchart of the manufacturing method of the stuffing structure according to an embodiment of the disclosure.

With reference to FIGs. 2A and 3 simultaneously, a first solution S1 that includes a carbon material C is provided (Step S100), in which the carbon material C may be graphene, carbon nanotubes, bamboo charcoal, or graphite. Furthermore, the carbon material C may first form multiple irregular portions through mechanical stirring, and then dispersed in water to form the first solution S1. In some embodiments, the carbon material C may be a raw material. In other words, the carbon material C may not be modified, but the disclosure is not limited thereto.

In an embodiment, optionally, when a stuffing F to be used subsequently is feathers, the first solution S1 may be further mixed with a feather fluffing agent solution (feather fluffing agent and water), so as to improve usability of the stuffing F. The feather fluffing agent may be an additive known to those skilled in the art, but the disclosure is not limited thereto. The first solution S1 may also not be mixed with the feather fluffing agent solution.

In an embodiment, the first solution S1 and the feather fluffing agent solution may be mixed by a volume ratio of one to four, but the disclosure is not limited thereto. A mixing ratio of the first solution S1 and the feather fluffing agent solution may be adjusted according to the actual design requirements.

It should be noted that an addition amount of the carbon material C may be adjusted to correspond to a subsequent addition amount of the stuffing F, therefore the disclosure does not limit the addition amount of the carbon material C in the first solution S1.

Next, with reference to FIGs. 2B and 3 simultaneously, the stuffing F and water are added to the first solution S1, so as to form a second solution S2 (Step S200), and the second solution S2 is stirred (Step S300). The stuffing F may be bird feathers (for example, including down and feathers), artificial fibers (staple fibers), or natural cotton. Furthermore, a stirring temperature range of the second solution S2 is, for example, between 25°C and 100°C. For example, the second solution S2 may be stirred at room temperature (such as 25°C), therefore no additional heating equipment is required, which reduces manufacturing costs. However, the disclosure is not limited thereto. The second solution S2 may be stirred at a high temperature (such as 80° C), so as to enhance an adhesion capability of the carbon material C. However, the disclosure does not limit the stirring temperature, and the stirring temperature may be adjusted according to the actual design requirements.

In addition, in a case that the first solution S1 also uses only water as the solvent, as compared to other stuffing structures that use multiple organic solvents (such as ethanol) for processing, the stuffing structure of the embodiment may take into consideration environmental protection simultaneously, but the disclosure is not limited thereto.

In an embodiment, a stirring duration of the second solution S2 is between 15 minutes and 8 hours, but the disclosure is not limited thereto. The stirring duration of the second solution S2 may be adjusted according to the actual design requirements.

Then, with reference to FIGs. 2C and FIG. 3 simultaneously, the stuffing F of the second solution S2 is dried (Step S400), for example, the stuffing F of the second solution S2 may be filtered and then dried, but the disclosure is not limited thereto. Accordingly, the stuffing structure 100 as shown in FIG. 1A may be formed. Furthermore, no pressure spraying or other processes are used during the manufacturing process of the embodiment, therefore the stuffing structure 100 does not have a resin material layer. In other words, the stuffing structure 100 may reduce usage of materials, thereby reducing its manufacturing cost.

In an embodiment, a drying temperature of the stuffing F is between 80°C and 120°C, but the disclosure is not limited thereto.

In summary, the stuffing structure of the disclosure may enable the stuffing structure to have the function of improving the thermal energy storage capability through the design of configuring the carbon layer that can radiate the infrared on the surface of the stuffing substrate, thereby improving the economic value of the resultant product from the processing of the stuffing structure. For example, in the bedding product or the clothing product, when the stuffing substrate is feathers, and the carbon layer is graphene, the stuffing structure including the above-mentioned material (graphene) is enabled to have the enhanced thermal energy storage capability and the antibacterial function through the graphene having properties such as the capability to radiate the far infrared and antibacterial capabilities, thereby further enhancing the economic value of the resultant product from the processing of the stuffing structure.

## Claims

1. A stuffing structure (100), comprising:
a stuffing substrate (110), having a surface (110a); and
a carbon layer (120), directly attached to the surface (110a), and exhibiting an irregular shape, wherein the carbon layer (120) is configured to radiate infrared.

2. The stuffing structure (100) according to claim 1, wherein the stuffing substrate (110) comprises feathers, artificial fibers, or natural cotton, and the carbon layer (120) comprises graphene, carbon nanotubes, bamboo charcoal, or graphite.

3. The stuffing structure (100) according to claim 2, wherein the stuffing substrate (110) is feathers, and the carbon layer (120) is graphene.

4. The stuffing structure (100) according to claim 1, wherein a weight ratio of the carbon layer (120) to the stuffing substrate (110) is at least greater than or equal to 0.1%, and less than or equal to 100%.

5. The stuffing structure (100) according to claim 1, wherein the stuffing structure (100) does not have a resin material layer.

6. The stuffing structure (100) according to claim 1, wherein the carbon layer (120) comprises at least two portions (121, 122, 123), and the at least two portions (121, 122, 123) have different sizes.

7. The stuffing structure (100) according to claim 6, wherein the at least two portions (121, 122, 123) have different irregular shapes.

8. The stuffing structure (100) according to claim 1, wherein the carbon layer (120) comprises a plurality of portions (121, 122, 123), and the plurality of portions (121, 122, 123) are irregularly distributed on the surface (110a).

9. The stuffing structure (100) according to claim 8, wherein the plurality of portions (121, 122, 123) comprises at least a first portion (121), a second portion (122), and a third portion (123), and a distance (d1) between the first portion (121) and the second portion (122) is different from a distance (d2) between the second portion (122) and the third portion (123).

10. A manufacturing method of a stuffing structure (100), comprising:
providing a first solution (S1), wherein the first solution (S1) comprises a carbon material (C);
adding a stuffing (F) and water to the first solution (S1) to form a second solution (S2);
stirring the second solution (S2); and
drying the stuffing (F) of the second solution (S2).
